# EUROPÄISCHE PATENTSCHRIFT

(11) **EP 0 510 663 B1**
(45) Veröffentlichungstag und Bekanntmachung des Hinweises auf die Patenterteilung: **28.02.1996**
(21) Anmeldenummer: 92107019.9
(22) Anmeldetag: 24.04.1992
(51) Int. Cl.: G01F 23/24, G01F 23/22

(54) **Vorrichtung zum Nachweis eines flüssigen oder gasförmigen Mediums**
Device for detecting a liquid or a gas
Dispositif pour la détection d'une matière liquide ou gazeuse

(30) Priorität: 25.04.1991 DE 4113443
(43) Veröffentlichungstag der Anmeldung: 28.10.1992
(73) Patentinhaber: Trilog Entwicklungsgesellschaft für Mehrwegsysteme GmbH, D-37586 Dassel-Amelsen (DE)
(72) Erfinder: Rengshausen-Fischbach, Bodo, W-3354 Dassel-Amelsen (DE); Rengshausen, Detlef, W-3354 Dassel-Amelsen (DE)
(74) Vertreter: Eisenführ, Speiser & Partner

(56) Entgegenhaltungen:
- EP-A- 0 074 491
- FR-A- 1 457 413
- GB-A- 772 046
- GB-A- 1 149 607
- GB-A- 2 168 153
- US-A- 4 899 584

## Beschreibung

Die Erfindung betrifft eine Vorrichtung zum Nachweis eines flüssigen oder gasförmigen Mediums, insbesondere einer auf eine bestimmte Füllhöhe in ein Gefäß gefüllten Flüssigkeit, mit mindestens einer mit einem flüssigen oder gasförmigen Medium in Berührung bringbaren Sensoreinheit, die bei einem Austausch eines ersten flüssigen oder gasförmigen Mediums (z.B. Luft) gegen ein zu erfassendes zweites flüssiges oder gasförmiges Medium (z.B. Flüssigkeit) ein entsprechendes Signal abgibt und ein Heizelement und einen Temperaturfühler aufweist, wobei das Heizelement eine solche Wärme abstrahlt und der Temperaturfühler gegenüber dem Heizelement so angeordnet ist, daß die am Temperaturfühler herrschende und von diesem gemessene Temperatur durch das Heizelement beeinflußbar ist, und sich das Signal aus einer vom Temperaturfühler gemessenen Temperaturänderung ergibt.

Eine solche Vorrichtung ist beispielsweise aus der FR-A-1457413 bekannt. Bei dieser bekannten Vorrichtung besteht der Temperaturfühler aus einem Thermoelement, der sowohl mit seinem wärmeren Ende, das sich in direktem körperlichen Kontakt mit dem Heizelement befindet, als auch mit seinem kälteren Ende mit der zu erfassenden Flüssigkeit in Berührung bringbar ist. Zwar wird mit einer solchen Konstruktion die Eigentemperatur der Flüssigkeit bei deren Erfassung 'ausgeblendet', da die bekannte Vorrichtung lediglich zum Nachweis der Flüssigkeit vorgesehen ist; jedoch ist die Funktion der bekannten Vorrichtung ausschließlich auf den Nachweis von elektrisch isolierenden Flüssigkeiten, wie z.B. Öl, beschränkt. Im Falle von elektrisch leitenden Flüssigkeiten werden nämlich die beiden Enden des Thermoelementes durch die elektrisch leitende Flüssigkeit miteinander kurzgeschlossen, so daß das Thermoelement dann keine Spannung mehr abgeben kann. Bekanntlich arbeitet ein Thermoelement ja so, daß zwischen seinem wärmeren Ende und seinem kälteren Ende eine Spannungsdifferenz entsteht, die einen gemessenen Temperaturwert repräsentiert. Wollte man mit der bekannten Konstruktion auch elektrisch leitende Flüssigkeiten auswerten, müßte die Konstruktion in ein isolierendes Gehäuse eingebaut werden, wodurch jedoch die Auswertezeiten drastisch verlängert würden. Ein weiterer Nachteil der bekannten Vorrichtung besteht darin, daß die Meßgenauigkeit sehr gering ist, so daß eine Unterscheidung von Flüssigkeit mit geringen Unterschieden in der Wärmeleitfähigkeit kaum oder gar nicht möglich ist. Dies hat seinen Grund insbesondere darin, daß die Höhe der Wärmeverluste am Heizele-ment von den Wärmeleitfähigkeits- bzw. Isolationseigenschaften der umgebenden Flüssigkeit abhängt. Je größer die Wärmeleitfähigkeit der umgebenden Flüssigkeit ist, desto mehr Wärme geht verloren und desto weniger Wärme wird vom Ende des Thermoelementes aufgenommen. Hieraus ergeben sich nicht unerhebliche Meßungenauigkeiten, die den exakten Nachweis bestimmter Flüssigkeiten erschweren oder sogar unmöglich machen können.

Eine Vorrichtung der eingangs gennanten Art wird insbesondere in Abfüllanlagen, in denen eine Flüssigkeit in Gefäßen abgefüllt wird, als Flüssigkeitspegelerfassungsvorrichtung verwendet, die anzeigt, wann während des Füllvorganges die Flüssigkeit in dem zu befüllenden Gefäß eine bestimmte Füllhöhe erreicht hat, und dann ein Abschalten der Abfüllvorrichtung bewirkt, wodurch ein Überlaufen des befüllten Gefäßes verhindert wird.

Es sind verschiedene Arten von Flüssigkeitspegelerfassungsvorrichtungen bekannt, die jedoch je nach Art ihres Aufbaus und ihrer Funktion unterschiedlichen Einschränkungen unterliegen und somit nur bedingt einsatzfähig sind.

So ist beispielsweise eine Flüssigkeitspegelerfassungsvorrichtung bekannt, deren Sensoreinheit zwei beabstandete Elektroden aufweist, die auf der Höhe eines bestimmten Pegels bzw. einer gewünschten Füllhöhe angeordnet sind. An den Elektroden liegt eine Spannung an, und es wird der zwischen den beiden Elektroden fließende Strom und somit der Widerstand zwischen den beiden Elektroden gemessen. Solange die Flüssigkeit den gewünschten Pegel noch nicht erreicht hat, sind die Elektroden von Luft umgeben, so daß der gemessene Widerstand nahezu unendlich ist. Beim Ansteigen der Flüssigkeit auf den fraglichen Pegel, tauchen die beiden Elektroden automatisch in die Flüssigkeit ein, wodurch sich der elektrische Widerstand zwischen den beiden Elektroden verringert. Eine solche Abnahme des Widerstandswertes ergibt das Signal, welches anzeigt, daß der Pegel erreicht worden ist. Allerdings funktioniert diese bekannte Vorrichtung im wesentlichen nur bei elektrisch leitfähigen Flüssigkeiten, da nur bei diesen eine merkliche Änderung des elektrischen Widerstandes zwischen den Elektroden feststellbar ist. Dagegen ist die Änderung des Widerstandswertes bei Flüssigkeiten mit sehr geringer elektrischen Leitfähigkeit bzw. mit Isolationseigenschaften derart gering, daß es einen erheblichen Aufwandes an Auswerteelektronik bedarf, um eine solche Widerstandsänderung noch erfassen zu können. Dieser Aufwand lohnt sich jedoch für die meisten Anwendungsfälle nicht, so daß die Messung des elektrischen Widerstandes zur Erfassung eines bestimmten Pegels bzw. einer bestimmten Füllhöhe im wesentlichen nur bei elektrisch leitfähigen Flüssigkeiten funktioniert.

Die vorgenannten Probleme bestehen zwar bei einer Flüssigkeitspegelerfassungsvorrichtung nicht, die mit Hilfe eines Schwimmerschalters auf mechanischem Wege den Pegel bzw. die Füllhöhe erfaßt. Die Nachteile dieser bekannten Vorrichtung liegen jedoch im mechanischen Verschleiß und somit einer geringeren Lebensdauer sowie in der relativ großen Bauform, die gerade einen Einsatz in recht beengten räumlichen Verhältnissen unmöglich macht. Außerdem besteht stets die Gefahr, daß der Schwimmerschalter von Flüssigkeit "verklebt" wird, was einen Verlust der Funktionstüchtigkeit der gesamten Vorrichtung zur Folge hat. Dieses Problem tritt gerade besonders häufig bei Flüssigkeiten mit höherer Viskosität auf, so daß die mechanische Pegel- bzw. Füllhöhenmessung gerade für derartige Flüssigkeiten ungeeignet ist.

Es gibt weitere bekannte Vorrichtungen, bei denen nicht durch direkte Messung, sondern auf indirekte Weise festgestellt wird, wann eine Flüssigkeit in einem Gefäß eine bestimmte Füllhöhe erreicht hat. Bei diesen Vorrichtungen werden externe Parameter zur Bestimmung der Füllstandshöhe zugrundegelegt, wie z.B. das Volumen der durch eine Leitung oder eine Pumpe mit einer bekannten Querschnittsfläche geförderten Flüssigkeit, die Zeitdauer des Füllvorgangs oder das Gewicht der in das Gefäß gefüllten Flüssigkeit. Damit diese Vorrichtungen jedoch korrekt funktionieren, müssen noch weitere Parameter und Randbedingungen wie z.B. spezifisches Gewicht, Fließfähigkeit, Temperaturabhängigkeit und Viskosität der Flüssigkeit sowie Form und Volumen des Gefäßes berücksichtigt werden. Auf diese zusätzlichen Parameter und Randbedingungen müssen diese Vorrichtungen eingestellt und justiert werden; Änderungen sind nur mit einem höherem Aufwand verbunden, so daß sich diese Vorrichtungen nur zur Erfassung einer bestimmten Füllhöhe einer bestimmten Flüssigkeit in einem bestimmten Behälter eignet.

Es ist daher Aufgabe der Erfindung, eine Vorrichtung der eingangs genannten Art derart zu verbessern, daß sie ohne Einschränkung für beliebige flüssige oder gasförmige Medien verwendet werden kann, zuverlässig arbeitet, eine kompakte Bauform besitzt und preisgünstig herzustellen ist.

Diese Aufgabe wird bei einer Vorrichtung der eingangs genannten Art dadurch gelöst, daß gemäß Anspruch 1 ein Temperaturregler, der die vom Heizelement am Temperaturfühler erzeugte Temperatur auf einen konstanten Wert regelt, wobei dem Temperaturregler ein vom Temperaturfühler gemessener Ist-Temperaturwert zugeführt und mit einem intern eingestellten Soll-Temperaturwert verglichen wird, und eine Steuereinrichtung vorgesehen ist, die bei Empfang eines den Beginn einer Meßphase anzeigenden Signals den Temperaturregler inaktiviert.

Bei der erfindungsgemäßen Flüssigkeitspegelerfassungsvorrichtung erzeugt demnach ein Heizelement Wärme und strahlt diese an die Umgebung ab. Der auf den Temperaturfühler auftreffende Anteil der vom Heizelement abgestrahlten Wärme beeinflußt die dort herrschende Temperatur. Diese Temperatur mißt der Temperaturfühler. Dabei befinden sich das Heizelement und der Temperaturfühler in Berührung mit einem ersten flüssigen oder gasförmigen Medium (z.B. Luft) und werden also von diesem umgeben. Wenn sich das Medium verändert, d.h. das erste Medium gegen ein zweites flüssiges oder gasförmiges Medium ausgetauscht wird, hat dies eine Änderung der am Temperaturfühler herrschenden und von diesem gemessenen Temperatur zur Folge. Die Temperaturänderung bildet demnach ein Signal, durch das das Vorhandensein eines neuen flüssigen oder gasförmigen Mediums nachgewiesen werden kann. Die Erfindung macht sich dabei die Erkenntnis zunutze, daß im wesentlichen unterschiedliche flüssige oder gasförmige Medien unterschiedliche Wärmeleit- und Wärmespeichereigenschaften besitzen.

Mit Hilfe des erfindungsgemäß vorgesehenen Temperaturreglers wird nun gewährleistet, daß das Heizelement genug Wärme erzeugt, die die am Temperaturfühler herrschende Temperatur ausreichend stark beeinflussen kann, so daß Fremdeinflüsse unterdrückt werden können. Demnach regelt der Temperaturregler die Temperatur des Heizelementes in Abhängigkeit vom umgebenden Medium auf einen einstellbaren Temperaturdifferenzwert, wobei der Temperaturfühler als Istwert-Geber dient. In der Meßphase wird der Temperaturregler dann inaktiviert. Der sich daraus ergebende Vorteil besteht darin, daß während einer Änderung oder eines Austausches des Mediums die Temperaturänderung nicht sofort wieder ausgeregelt wird und somit eindeutig erfaßt werden kann.

Ein weiterer Vorteil der Erfindung besteht darin, daß im Gegensatz zum Stand der Technik der exakte Nachweis von beliebigen flüssigen oder gasförmigen Medien auch unabhängig von deren elektrischen Eigenschaften erzielbar ist, also z.B. von elektrisch leitfähigen und nichtleitfähigen sowie niedrig- und hochviskosen Flüssigkeiten, wobei im Sinne der Erfindung auch Vakuum als "Medium" zu definieren ist.

Die erfindungsgemäße Vorrichtung kann besonders kompakt ausgeführt werden, wodurch der Einsatz auch in besonders beengten räumlichen Verhältnissen möglich ist. Die erfindungsgemäße Vorrichtung läßt sich überdies preisgünstig herstellen, da allgemein erhältliche Teile verwendet werden können. Hervorzuheben sind noch die leichte und sichere Bedienbarkeit und die einfache Installation.

Zwar ist aus der GB-A-2168153 eine Vorrichtung zur Anzeige und Regelung des Flüssigkeitspegels bekannt, bei welcher die Temperatur des Heizelementes auf einen konstanten Wert geregelt wird; jedoch läßt sich diesem Stand der Technik nirgends ein Hinweis auf die Anordnung einer Steuereinrichtung entnehmen, die bei Empfang eines den Beginn einer Meßphase anzeigenden Signals die Temperaturregelung inaktiviert.

Auch in der EP-A-074 491, die ebenfalls eine auf Wärmemessung basierende Flüssigkeitspegelerfassungsvorrichtung beschreibt, wird auf eine Regeleinrichtung im Zusammenhang mit einem Heizelement hingewiesen, jedoch dient diese bekannte Regeleinrichtung lediglich zur Regelung der Versorgungsspannung des Heizelementes auf einen konstanten Wert. Diese bekannte Regeleinrichtung regelt demnach nicht die vom Heizelement erzeugte Wärme auf einen konstanten Wert. Abgesehen davon, ist auch bei dieser bekannten Vorrichtung eine Steuereinrichtung nicht vorhanden, die bei Empfang eines den Beginn einer Meßphase anzeigenden Signals die Temperaturregelung inaktiviert.

Vorzugsweise ist der Temperaturfühler in einem Abstand zum Heizelement angeordnet, so daß zumindest ein Teil der vom Heizelement erzeugten Wärmestrahlung durch das Medium hindurch verläuft. Der Temperaturfühler und das Medium sind derart angeordnet, daß sie jeweils zumindest teilweise mit dem zu erfassenden Medium in direkten Kontakt bringbar sind. Dadurch wird zumindest ein Anteil der vom Heizelement erzeugten Wärme direkt durch das Medium hindurch zum Temperaturfühler übertragen, so daß zumindest dieser Anteil der am Temperaturfühler gemessenen Wärme direkt von den Wärmeleitfähigkeitseigenschaften des Mediums abhängt. Es wird also eine direkte Wärmebrücke vom Heizelement zum Temperaturfühler geschaffen, die es in vorteilhafter Weise erlaubt, gerade auch nur geringe Veränderungen im Medium recht präzise zu erfassen.

Alternativ kann sich der Temperaturfühler mit einem Abschnitt der die Wärme abgebenden Fläche des Heizelementes in körperlichem Kontakt befinden. Diese Ausführung hat nicht nur den Vorteil einer besonders kompakten Bauform, sondern gewährleistet auch eine sichere thermische Verbindung zwischen Heizelement und Temperaturfühler. Dadurch kann die vom Heizelement erzeugte Wärme begrenzt werden, was sich vorteilhaft auf die Größe und Leistungsfähigkeit und somit die Herstellungskosten des Heizelementes auswirkt. Bei diesen Ausführungen wird also die Temperatur am Temperaturfühler im wesentlichen direkt durch das Heizelement erzeugt.

Das Heizelement sollte dabei eine Temperatur erzeugen, die oberhalb oder unterhalb der in den zu erfassenden Medien herrschenden allgemeinen Temperatur und/oder auch der Umgebungstemperatur liegt. Mit "allgemeiner Temperatur" wird diejenige Temperatur bezeichnet, die unbeeinflußt vom Heizelement in dem zu erfassenden Medium herrscht.

Eine an den Temperaturfühler angeschlossene Auswerteeinrichtung kann vorgesehen sein, die bei einer vom Temperaturfühler gemessenen Temperaturänderung ein Ausgangssignal abgibt, das die Anwesenheit des zu erfassenden Mediums anzeigt.

Zweckmäßigerweise ist das erste Medium Luft und das zu erfassende zweite Medium eine Flüssigkeit, wobei das Heizelement und/oder der Temperaturfühler so angeordnet sind, daß das Heizelement und/oder der Temperaturfühler von der Flüssigkeit bei deren Anstieg auf einen bestimmten Pegel umgeben werden. Solange das Heizelement und der Temperaturfühler von der Luft umgeben sind - wenn sich also die Flüssigkeit unterhalb des bestimmten Pegels befindet -, wird der Temperaturfühler vom Heizelement direkt bestrahlt. Dabei muß natürlich das Heizelement eine solche Wärme abstrahlen und der Temperaturfühler gegenüber dem Heizelement so angeordnet sein, daß die am Temperaturfühler herrschende Temperatur vom Heizelement beeinflußt wird. Wenn nun bei Anstieg der Flüssigkeit auf den fraglichen Pegel bzw. Füllstand das Heizelement und/oder der Temperaturfühler von dieser umgeben wird, wird die Bestrahlung des Temperaturfühlers mit der vom Heizelement erzeugten Wärme zumindest kurzzeitig unterbrochen, und der Temperaturfühler mißt nun entweder die Temperatur der Umgebungsluft - wenn bereits das Heizelement von der angestiegenen Flüssigkeit umschlossen wird, der Temperaturfühler jedoch noch nicht - oder die Temperatur der Flüssigkeit - wenn der Temperaturfühler von dieser umgeben wird. In diesem Moment ändert sich also die Temperatur an der Oberfläche des Temperaturfühlers, so daß dieser eine Temperaturänderung mißt. Da die Flüssigkeiten im allgemeinen eine größere thermische Leitfähigkeit besitzen, äußerst sich diese Temperaturänderung in einem zumindest kurzzeitigen Temperaturabfall. An dieser Stelle sei darauf hingewiesen, daß der Einfluß des Heizelementes auf die am Temperaturfühler herrschende Temperatur zumindest während dieses Übergangszustandes unterbrochen wird. Im eingeschwungenen Zustand, also nach Ausgleich der Temperaturunterschiede, kann die am Temperaturfühler herrschende Temperatur auch innerhalb der Flüssigkeit (in ähnlicher Weise wie zuvor innerhalb der Luft) durch das Heizelement beeinflußt werden.

An die Auswerteeinrichtung kann eine die Flüssigkeit in Gefäße füllende Abfüllvorrichtung angeschlossen sein, die bei Übermittlung des Ausgangssignals von der Auswerteeinrichtung den Füllvorgang beendet. Die Erfindung eignet sich somit insbesondere für den Einsatz von Abfüllvorrichtungen, die im automatischen Betrieb arbeiten, wie z.B. Abfüllvorrichtungen zum automatischen Abfüllen einer Vielzahl von Flaschen oder Dosen.

Bei Einsatz der erfindungsgemäßen Vorrichtung in Verbindung mit einer Abfüllvorrichtung kann der Temperaturregler während des Füllvorganges inaktiviert werden, damit die Temperaturänderung nicht sofort wieder ausgeregelt wird, wenn die Flüssigkeit den Pegel überschreitet. Hierzu kann die Steuereinrichtung bei Empfang eines das Vorhandensein eines Gefäßes in der Abfüllvorrichtung anzeigenden Signals die Regeleinrichtung inaktivieren.

Vorzugsweise kann als Temperaturfühler ein Thermoelement oder ein temperaturabhängiger Widerstand und als Heizelement ein Heizwiderstand oder -draht vorgesehen sein.

Nachfolgend wird ein bevorzugtes Ausführungsbeispiel der Erfindung anhand der beiliegenden Zeichnungen näher erläutert. Es zeigen:
- Fig. 1: eine Seitenansicht eines Abfüllgerätes mit Füllstandsmessung;
- Fig. 2: eine Vorderansicht des Abfüllgerätes von Fig. 1; und
- Fig. 3: ein Blockschaltbild des Abfüllgerätes mit den für die Füllstandsmessung erforderlichen Elementen.

Nachfolgend wird eine in einem Abfüllgerät vorgesehene Ausführung der erfindungsgemäßen Erfassungsvorrichtung beschrieben. Der Verwendungszweck der beschriebenen Ausführung besteht darin, festzustellen, wann während des Abfüllvorganges des Abfüllgerätes die Flüssigkeit in einem Gefäß eine bestimmte Füllhöhe erreicht hat, um dann den Abfüllvorgang zu beenden.

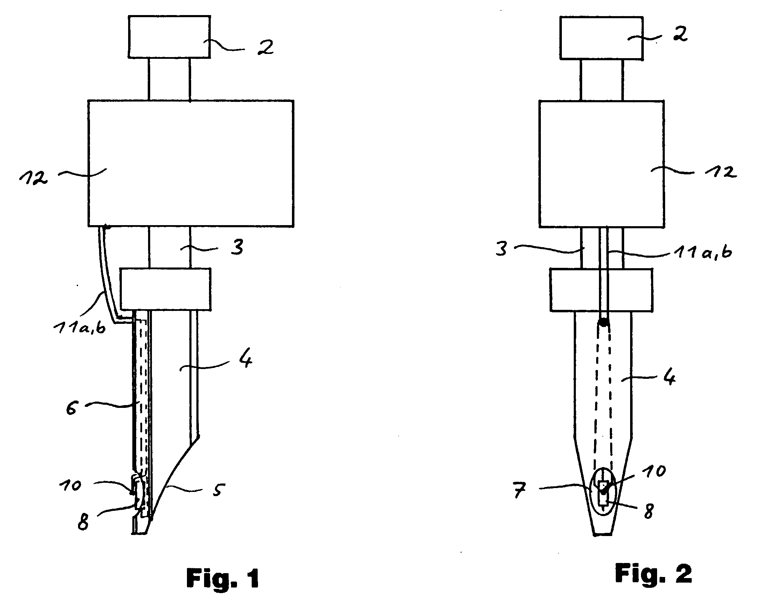

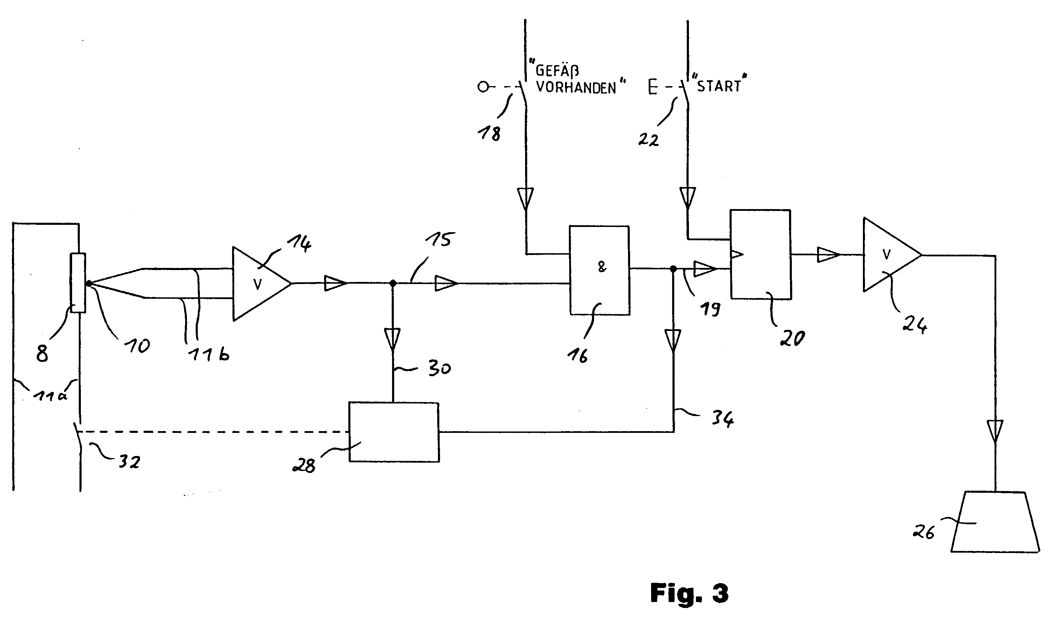

In den Figuren 1 und 2 ist ein Abfüllgerät dargestellt, das einen Anschluß 2 für einen nicht dargestellten Behälter aufweist, welcher vom Abfüllgerät abzugebende Flüssigkeit enthält. Das Abfüllgerät enthält ferner ein Abfüllrohr 3, das am Behälteranschluß 2 angeschlossen ist und durch ein Rohr 4 geführt ist, welches ein abgeschrägtes unteres offenes Ende 5 besitzt, in das das Abfüllrohr 3 mündet. Die im nicht dargestellten Behälter befindliche Flüssigkeit wird also durch den Behälteranschluß 2 und das Abfüllrohr 3 aus dem unteren Ende 5 abgegeben.

Das untere Rohr 4 umschließt nicht nur das Abfüllrohr 3, sondern noch ein davon getrennt angeordnetes Röhrchen 6, welches in eine seitliche Öffnung 7 am unteren Ende 5 des Rohres 4 mündet. In dieser Öffnung 7 sitzen ein Heizelement 8 und ein Thermoelement 10. Das Heizelement 8 und das Thermoelement 10 sind an Anschlußleitungen 11a und b angeschlossen, die durch das Röhrchen 6 verlaufen und in ein Gehäuse 12 geführt sind, das einen Großteil der in Fig. 3 dargestellten Schaltung enthält. Wie die Figuren 1 und 2 außerdem erkennen lassen, ist das Abfüllrohr 3 vom Behälteranschluß 2 durch dieses Gehäuse 12 hindurch zum unteren Rohr 4 geführt.

In Fig. 3 ist eine Schaltung in einem Blockschaltbild dargestellt, welche die wichtigsten Funktionselemente der Füllstandserfassungsvorrichtung enthält.

Das Heizelement 8 besteht vorzugsweise aus einem Heizwiderstand oder -draht und erzeugt Wärme, indem Spannung an die entsprechenden Anschlußleitungen 11a gelegt wird. Das Thermoelement 10 ist im Abstand zum Heizelement 8 in dessen unmittelbarer Nähe angeordnet oder befindet sich mit einem Abschnitt der die Wärme abgebenden Fläche des Heizelementes 8 in körperlichem Kontakt. Das Thermoelement 10 ist über Anschlußleitungen 11b an einen Meßverstärker 14 angeschlossen, der die Meßsignale vom Thermoelement 10 entsprechend verstärkt und über eine Leitung 15 an ein UND-Glied 16 weiterleitet. Der andere Eingang des UND-Gliedes 16 ist an einen Sensor 18 angeschlossen. Dieser Sensor 18 gibt ein entsprechendes Signal, wenn ein zu befüllendes Gefäß unter das in den Figuren 1 und 2 dargestellte Abfüllgerät gesetzt wird. In dem beschriebenen Ausführungsbeispiel besteht der Sensor 18 aus einem Schalter, dessen Betätigungsorgan bei Anordnung eines Gefäßes mit diesem in Berührung gelangt und von diesem entsprechend betätigt wird. Durch das UND-Glied 16 wird das Signal vom Thermoelement 10 also nur dann weitergegeben, wenn tatsächlich ein zu befüllendes Gefäß angeordnet worden ist. Der Ausgang des UND-Gliedes ist über eine Leitung 19 an eine Auswertelogik 20 angeschlossen, der von einem Ein-Taster 22 angesteuert wird. Mit Hilfe dieses Tasters 22 wird der Abfüllvorgang gestartet. Der Ausgang der Auswertelogik 20 ist über einen Ansteuerschaltkreis 24 an ein Ventil 26 angeschlossen. Dieses Ventil 26 ist innerhalb des Gehäuses 12 in das Abfüllrohr 3 geschaltet und schließt und öffnet das Abfüllrohr 3 in Abhängigkeit von dem von der Auswertelogik 20 über den Ansteuerschaltkreis 24 abgegebenen Signal.

Außerdem ist ein Temperaturregler 28 vorgesehen, der über eine Leitung 30 an die Leitung 15 angeschlossen ist. Der Meßverstärker 14 gibt über die Leitung 15 den vom Thermoelement 10 gemessenen Ist-Temperaturwert aus. Über die Leitung 30 wird dieser Ist-Temperaturwert auch dem Temperaturregler 28 zugeführt. Dieser vergleicht den empfangenen Ist-Temperaturwert mit einem intern eingestellten Soll-Temperaturwert und steuert entsprechend einen in die Anschlußleitungen 11a des Heizelementes 8 geschalteten Schalter 32 zum wahlweisen Zu- und Abschalten der Spannung am Heizelement 8 an. Auf diese Weise wird durch entsprechendes Zu- und Abschalten der Spannung am Heizelement 8 die von diesem erzeugte Wärme auf einem im wesentlichen konstanten Wert geregelt. In dem beschriebenen Ausführungsbeispiel wird jedoch der Temperaturregler 28 über eine Leitung 34 inaktiviert, welche an der Leitung 19 angeschlossen ist. Wenn also ein Gefäß vorhanden ist, damit der Abfüllvorgang durchgeführt werden kann, schaltet das UND-Glied 16 das vom Thermoelement 10 erzeugte Signal auf die Leitung 19 durch, so daß ein entsprechendes Signal auch über die Leitung 34 am Temperaturregler 28 anliegt, welches dessen Inaktivierung bewirkt.

Die zuvor beschriebenen Elemente 14, 15, 16, 19, 20, 24, 26, 28, 30, 32 und 34 sind in dem Gehäuse 12 (vgl. Figuren 1 und 2) untergebracht.

Wie aus der zuvor erfolgten Beschreibung deutlich wird, wird die Füllstandserfassungsvorrichtung im wesentlichen von dem Heizelement 8, dem Thermoelement 10, dem Meßverstärker 14, dem UND-Glied 16, der Auswertelogik 20 und dem Temperaturregler 28 gebildet.

Nachfolgend wird die Funktion der Füllstandserfassungsvorrichtung in Verbindung mit der Abfüllvorrichtung beschrieben.

Das in den Figuren 1 und 2 dargestellte Abfüllgerät ist mit dem Behälteranschluß 2 an einen nicht dargestellten Sammelbehälter angeschlossen, damit aus diesem über das Abfüllrohr 3 Flüssigkeit in ein unterhalb des Abfüllgerätes anzuordnendes Gefäß abgegeben werden kann. Dabei wird das zu befüllende Gefäß unterhalb des Rohres 4 so angeordnet, daß dessen unteres Ende 5 ein wenig in das Gefäß hineinragt, damit das Heizelement 8 und das Thermoelement 10 auf der Höhe der maximal zulässigen Füllhöhe angeordnet sind, bei welcher der Abfüllvorgang beendet werden soll, um ein Überfließen des Gefäßes zu verhindern. Durch Anlegen einer Spannung an die Anschlußleitungen 11a erzeugt das Heizelement 8 nun Wärme und strahlt diese in die Umgebung und somit auch an das Thermoelement 10 ab. Dabei muß diese Wärme so hoch sein, daß die am Thermoelement 10 herrschende und von diesem gemessene Temperatur entsprechend beeinflußt wird. Dabei regelt der Temperaturregler 28 die vom Heizelement 8 am Thermoelement 10 erzeugte Temperatur auf einen konstanten Wert. Wird nun ein zu befüllendes Gefäß unter das Abfüllgerät gestellt, so gibt der Sensor 18 ein entsprechendes Signal an das UND-Glied 16 ab, so daß die vom Thermoelement 10 über den Meßverstärker 14 abgegebenen Signale an die Auswertelogik 20 übertragen und gleichzeitig auch auf die Leitung 34 gegeben werden, wodurch der Temperaturregler 28 inaktiviert wird. Durch Betätigung des Tasters 22 wird das Ventil 26 geöffnet, so daß die Flüssigkeit nun vom Behälter durch das Abfüllrohr 3 (vgl. Figuren 1 und 2) in das unterhalb des Abfüllgerätes angeordnete Gefäß fließen kann.

Während der Abfüllvorganges steigt nun der Pegel der Flüssigkeit im Gefäß an. Solange sich die Flüssigkeit im Gefäß unterhalb der maximal zulässigen Füllhöhe befindet, sind das Heizelement 8 und das Thermoelement 10 von Luft umgeben. Durch die geringe Wärmespeicherfähigkeit der Luft gelangt der auf das Thermoelement 10 gerichtete Anteil der Wärmestrahlung ohne größere Verluste zu diesem. Durch die schlechte Wärmeleitfähigkeit der Luft bildet diese außerdem ein das Heizelement 8 umgebendes Isoliermedium; dies hat zur Folge, daß größere Wärmeverluste am Heizelement 8 nicht entstehen. Wenn jedoch die im Gefäß ansteigende Flüssigkeit die maximal zulässige Füllhöhe erreicht hat, werden das Heizelement 8 und das Thermoelement 10 nun von der Flüssigkeit umgeben. Die größere thermische Leitfähigkeit und Wärmespeicherfähigkeit der Flüssigkeit bewirkt zumindest eine kurzzeitige Temperaturänderung am Heizelement 8. Hierzu liegt die vom Heizelement 8 erzeugte Temperatur oberhalb der in der Flüssigkeit herrschenden allgemeinen Temperatur. Gewöhnlicherweise ist die vom Heizelement 8 erzeugte Temperatur auch höher als die Temperatur der Luft. Allerdings kann alternativ die Temperatur des Heizelementes 8 auch niedriger als die Temperatur der Flüssigkeit und der Luft liegen.

Insbesondere wenn das Heizelement 8 und das Thermoelement 10 in einem Abstand zueinander angeordnet sind und von der Flüssigkeit zumindest teilweise umspült werden, wird zumindest ein Anteil der vom Heizelement 8 erzeugten Wärme direkt durch die Flüssigkeit hindurch zum Thermoelement 10 übertragen, so daß zumindest dieser Anteil der am Thermoelement 10 gemessenen Wärme direkt von dem Wärmeleitfähigkeitseigenschaften der Flüssigkeit abhängt. Es wird dann also eine direkte Wärmebrücke vom Heizelement 8 zum Thermoelement 10 geschaffen.

Die Temperaturänderung wird vom Thermoelement 10 erfaßt und über den Meßverstärker 14 und das UND-Glied 16 an die Auswertelogik 20 weitergegeben. Die Auswertelogik 20 wertet den Temperaturabfall aus und gibt über den Ansteuerschaltkreis 24 ein Schließsignal an das Ventil 26, wodurch dieses geschlossen und der Abfüllvorgang beendet wird.

Abschließend sei darauf hingewiesen, daß die zuvor beschriebene Erfassungsvorrichtung in Verbindung mit einem Abfüllgerät beschrieben worden ist. Gleichwohl kann die Vorrichtung auch für andere Anwendungsfälle und zum Nachweis anderer flüssiger oder auch gasförmiger Medien vorgesehen werden.

## Patentansprüche

1. Vorrichtung zum Nachweis eines flüssigen oder gasförmigen Mediums, insbesondere einer auf eine bestimmte Füllhöhe in ein Gefäß gefüllten Flüssigkeit, mit mindestens einer mit einem flüssigen oder gasförmigen Medium in Berührung bringbaren Sensoreinheit (8, 10), die bei einem Austausch eines ersten flüssigen oder gasförmigen Mediums (z.B. Luft) gegen ein zu erfassendes zweites flüssiges oder gasförmiges Medium (z.B. Flüssigkeit) ein entsprechendes Signal abgibt und ein Heizelement (8) und einen Temperaturfühler (10) aufweist, wobei das Heizelement (8) eine solche Wärme abstrahlt und der Temperaturfühler (10) gegenüber dem Heizelement (8) so angeordnet ist, daß die am Temperaturfühler (10) herrschende und von diesem gemessene Temperatur durch das Heizelement (8) beeinflußbar ist, und sich das Signal aus einer vom Temperaturfühler (10) gemessenen Temperaturänderung ergibt,
gekennzeichnet durch
einen Temperaturregler (28), der die vom Heizelement (8) am Temperaturfühler (10) erzeugte Temperatur auf einen
konstanten Wert regelt, wobei dem Temperaturregler (28) ein vom Temperaturfühler (10) gemessener Ist-Temperaturwert zugeführt und mit einem intern eingestellten Soll-Temperaturwert verglichen wird, und durch
eine Steuereinrichtung (16, 34), die bei Empfang eines den Beginn einer Meßphase anzeigenden Signals den Temperaturregler (28) inaktiviert.

2. Vorrichtung nach Anspruch 1,
dadurch gekennzeichnet, daß der Temperaturfühler (10) in einem Abstand zum Heizelement (8) angeordnet ist, so daß zumindest ein Teil der vom Heizelement (8) erzeugten Wärmestrahlung durch das Medium hindurch verläuft.

3. Vorrichtung nach Anspruch 1,
dadurch gekennzeichnet, daß sich der Temperaturfühler (10) mit einem Abschnitt der die Wärme abgebenden Fläche des Heizelementes (8) in körperlichem Kontakt befindet.

4. Vorrichtung nach mindestens einem der Ansprüche 1 bis 3,
dadurch gekennzeichnet, daß das Heizelement (8) eine Temperatur erzeugt, die oberhalb oder unterhalb der in den zu erfassenden Medien herrschenden allgemeinen Temperatur und/oder auch der Umgebungstemperatur liegt.

5. Vorrichtung nach mindestens einem der Ansprüche 1 bis 4,
gekennzeichnet durch eine an den Temperaturfühler (10) angeschlossene Auswerteeinrichtung (20), die bei einer vom Temperaturfühler (10) gemessenen Temperaturänderung ein Ausgangssignal abgibt, das die Anwesenheit des zu erfassenden Mediums anzeigt.

6. Vorrichtung nach mindestens einem der Ansprüche 1 bis 5,
dadurch gekennzeichnet, daß das erste Medium Luft und das zu erfassende zweite Medium eine Flüssigkeit ist und das Heizelement (8) und/oder der Temperaturfühler (10) so angeordnet sind, daß das Heizelement (8) und/oder der Temperaturfühler (10) von der Flüssigkeit bei deren Anstieg auf einen bestimmten Pegel umgeben werden.

7. Vorrichtung nach den Ansprüchen 5 und 6,
dadurch gekennzeichnet, daß an die Auswerteeinrichtung (20) eine die Flüssigkeit in ein Gefäß füllende Abfüllvorrichtung (2, 3, 26) angeschlossen ist, die bei Übermittlung des Ausgangssignals von der Auswerteeinrichtung (20) den Füllvorgang beendet.

8. Vorrichtung nach Anspruch 7,
dadurch gekennzeichnet, daß der Temperaturregler (28) während des Füllvorganges der Abfüllvorrichtung (2, 3, 26) inaktiviert ist.

9. Vorrichtung nach Anspruch 8,
dadurch gekennzeichnet, daß die Steuereinrichtung (16, 34) bei Empfang eines das Vorhandensein eines Gefäßes in der Abfüllvorrichtung (2, 3, 26) anzeigenden Signals den Temperaturregler (28) inaktiviert.

## Claims

1. Device for detecting a liquid or gaseous medium, in particular a liquid filled into a vessel to a certain filling height, having at least one sensor unit (8, 10) capable of being brought into contact with a liquid or gaseous medium, which sensor unit, on replacement of a first liquid or gaseous medium (e.g. air) by a second liquid or gaseous medium (e.g. liquid) to be detected, emits a corresponding signal and has a heating element (8) and a temperature detector (10), the heating element (8) radiating such a heat and the temperature detector (10) being arranged in such a way in relation to the heating element (8) that the temperature which prevails at the temperature detector (10) and is measured by the latter can be influenced by the heating element (8), and the signal resulting from a change in temperature measured by the temperature detector (10), characterised by
a temperature regulator (28) which regulates the temperature produced by the heating element (8) at the temperature detector (10) to a constant value, an actual temperature value measured by the temperature detector (10) being supplied to the temperature regulator (28) and compared with an internally set desired temperature value, and by
a control means (16, 34) which deactivates the temperature regulator (28) on receiving a signal indicating the start of a measuring phase.

2. Device according to Claim 1, characterised in that the temperature detector (10) is arranged at a distance from the heating element (8), so that at least part of the heat radiation produced by the heating element (8) passes through the medium.

3. Device according to Claim 1, characterised in that the temperature detector (10) is in physical contact with a portion of the surface, emitting the heat, of the heating element (8).

4. Device according to at least one of Claims 1 to 3, characterised in that the heating element (8) produces a temperature which is above or below the general temperature prevailing in the media to be detected and/or also the ambient temperature.

5. Device according to at least one of Claims 1 to 4, characterised by an evaluating means (20) which is connected to the temperature detector (10) and on a change in temperature measured by the temperature detector (10) emits an output signal which indicates the presence of the medium to be detected.

6. Device according to at least one of Claims 1 to 5, characterised in that the first medium is air and the second medium to be detected is a liquid and the heating element (8) and/or the temperature detector (10) are arranged in such a way that the heating element (8) and/or the temperature detector (10) are surrounded by the liquid when it rises to a certain level.

7. Device according to Claims 5 and 6, characterised in that there is connected to the evaluating means (20) a filling device (2, 3, 26) which fills the liquid into a vessel and on transmission of the output signal by the evaluating means (20) ends the filling operation.

8. Device according to Claim 7, characterised in that the temperature regulator (28) is deactivated during the filling operation of the filling device (2, 3, 26).

9. Device according to Claim 8, characterised in that the control means (16, 34) deactivates the temperature regulator (28) on receiving a signal indicating the presence of a vessel in the filling device (2, 3, 26).

## Revendications

1. Dispositif pour la détection d'un milieu liquide ou gazeux, notamment d'un liquide introduit dans un récipient jusqu'à une hauteur déterminée, qui est équipé d'au moins une unité de détection (8, 10) pouvant être mise en contact avec un milieu liquide ou gazeux, laquelle émet un signal correspondant lors du remplacement d'un premier milieu liquide ou gazeux (par exemple, l'air) par un deuxième milieu liquide ou gazeux (par exemple, un liquide) à mesurer, et laquelle est munie d'un élément de chauffage (8) et d'une sonde pyrométrique (10), l'élément de chauffage (8) émettant une telle chaleur et la sonde pyrométrique (10) étant disposée par rapport à l'élément de chauffage (8) de telle sorte que la température qui règne sur la sonde pyrométrique (10) et enregistrée par elle peut être influencée par l'élément de chauffage (8) et le signal émis est produit par la variation de température mesurée par la sonde pyrométrique (10),
caractérisé par
un thermorégulateur (28), qui règle à une valeur constante la température émise par l'élément de chauffage (8) sur la sonde pyrométrique (10), une valeur de température réelle mesurée par la sonde pyrométrique (10) étant amenée vers le thermorégulateur (28) pour être comparée à une valeur de température théorique régulée à l'intérieur du dispositif, et par
un dispositif de commande (16, 34), qui rend le thermorégulateur (28) inactif, dès qu'il reçoit un signal annonçant le début d'une phase de mesure.

2. Dispositif selon la revendication 1, caractérisé en ce que la sonde pyrométrique (10) est montée à une telle distance de l'élément de chauffage (8) qu'au moins une partie du rayonnement thermique émis par l'élément de chauffage (8) traverse le milieu.

3. Dispositif selon la revendication 1, caractérisé en ce que la sonde pyrométrique (10) est mise en contact physique avec une partie de la surface de l'élément de chauffage (8) qui émet la chaleur.

4. Dispositif selon l'une quelconque des revendications 1 à 3, caractérisé en ce que l'élément de chauffage (8) produit une température supérieure ou inférieure à la température régnant généralement dans les milieux à mesurer et/ou à la température ambiante.

5. Dispositif selon l'une quelconque des revendications 1 à 4, caractérisé par un dispositif d'évaluation (20) raccordé à la sonde pyrométrique (10), lequel émet un signal de sortie lors d'une variation de la température mesurée par la sonde pyrométrique (10), ledit signal annonce la présence du milieu à mesurer.

6. Dispositif selon l'une quelconque des revendications 1 à 5, caractérisé en ce que le premier milieu est l'air et le deuxième milieu à mesurer est un liquide, et en ce que l'élément de chauffage (8) et/ou la sonde pyrométrique (10) sont disposés de telle sorte que l'élément de chauffage (8) et/ou la sonde pyrométrique (10) sont entourés par le liquide lorsque celui-ci monte jusqu'à un niveau déterminé.

7. Dispositif selon les revendications 5 et 6, caractérisé en ce que le dispositif d'évaluation (20) est raccordé à un appareil de remplissage (2, 3, 26), qui introduit le liquide dans un récipient et qui stoppe le processus de remplissage dès qu'il reçoit le signal de sortie du dispositif d'évaluation (20).

8. Dispositif selon la revendication 7, caractérisé en ce que le thermorégulateur (28) reste inactif pendant le processus de remplissage de l'appareil de remplissage (2, 3, 26).

9. Dispositif selon la revendication 8, caractérisé en ce que le dispositif de commande (16, 34) rend le thermorégulateur (28) inactif dès qu'il reçoit un signal annonçant la présence d'un récipient dans l'appareil de remplissage (2, 3, 26).
